# EUROPÄISCHE PATENTSCHRIFT

(11) **EP 2 139 631 B1**
(45) Veröffentlichungstag und Bekanntmachung des Hinweises auf die Patenterteilung: **20.04.2011**
(21) Anmeldenummer: 08717565.9
(22) Anmeldetag: 10.03.2008
(51) Int. Cl.: B23B 13/08, B23B 31/14

(54) **ZENTRIERFUTTER ZUR ZENTRIERUNG VON MATERIALSTANGEN**
CENTERING BUSHING FOR CENTERING MATERIAL BARS
MANDRIN DE SERRAGE POUR LE CENTRAGE DE BARRES

(30) Priorität: 27.04.2007 CH 700072007
(43) Veröffentlichungstag der Anmeldung: 06.01.2010
(73) Patentinhaber: Moser Mechanik, 3714 Frutigen (CH)
(72) Erfinder: MOSER, Hansjürg, CH-3714 Frutigen (CH)
(74) Vertreter: Rüfenacht, Philipp Michael
(86) Internationale Anmeldenummer: PCT/EP2008/052818
(87) Internationale Veröffentlichungsnummer: WO 2008/131988

(56) Entgegenhaltungen:
- EP-A2- 0 999 003
- CH-A5- 580 999
- DE-A1- 3 210 630
- GB-A- 1 500 629

## Beschreibung

### Technisches Gebiet

Die vorliegende Erfindung bezieht sich auf ein Zentrierfutter zur Zentrierung von Materialstangen, welche einem Spannzangenfutter einer Drehbank zugeführt sind.

### Stand der Technik

Im Stand der Technik sind verschiedene Drehmaschinenkonzepte bekannt. Solche Drehmaschinenkonzepte können eine Drehmaschine (auch Drehcenter genannt) mit verschiedenen Werkzeugen, ein Spannzangenfutter, einen Einzelstangenlader oder ein Stangenlademagazin, mit welchen Materialstangen von beispielsweise 1 m bis 6 m Länge aufgenommen und mittels einer Stösseleinrichtung dem Spannzangenfutter zugeführt und somit durch ein Werkzeug bearbeitet werden können. Ein solches Drehmaschinenkonzept ist geeignet, um verschiedenartige Werkstücke herzustellen. Bei der Herstellung eines Werkstücks wird das Spannzangenfutter geöffnet und mittels dem Einzelstangenlader oder dem Stangenlademagazin und der Stösseleinrichtung die Materialstange eine gewünschte Länge in das Spannzangenfutter geführt. Das Spannzangenfutter wird daraufhin geschlossen und die Materialstange wird auf eine bestimmte Drehzahl beschleunigt. Mittels in der Drehmaschine angeordneten Werkzeugen wird das im Spannzangefutter eingespannte Ende der Materialstange bearbeitet und es wird ein Werkstück mit einer gewünschten Form hergestellt. Nach der Herstellung wird das Werkstück von der Materialstange abgestochen. Anschliessend wird die Drehung der Materialstange gestoppt, das Spannzangenfutter wird geöffnet und mit der Stösseleinrichtung wird die Materialstange wieder um eine bestimmte Länge vorgeschoben und die Herstellung eines nächsten Werkstücks wird durchgeführt.

Da Materialstangen nicht vollständig zentriert sind und oft eine bestimmte Unwucht haben, können insbesondere bei höheren Drehzahlen und bei längeren Materialstangen folgende Ereignisse eintreten. Es kann zu einer massiven Lärmentwicklung und damit zu gesundheitlichen Problemen wie Gehörschäden, Nervenschäden oder einer starken Ermüdung beim Bediener der Drehmaschine oder bei in der Maschinenhalle befindlichen Personen kommen. Es kann zu einer Beeinträchtigung der Maschinenlebensdauer oder zumindest zu evt. teuren Reparaturen und/oder hohen Kosten durch Maschinen-Ausfallstunden wegen einer starken Beanspruchung durch Vibrationen von Lager, der Elektronik, des Stangenladers oder anderer Maschinenteile kommen. Durch die exzentrisch (taumelnd) wirkenden Kräfte im Bereich des Spannzangenfutters kann es bei einer axialen Belastung der Materialstange, beispielsweise beim Bohren, durch ein Werkzeug der Drehmaschine zu einem Zurückschieben der Materialstange und damit zu einer Produktion von fehlerhaften Teilen kommen. Bei unterschiedlichen Drehzahlen kann es zu Koaxialitätsproblemen kommen, welche insbesondere dann auftreten können, wenn ein erster Bearbeitungsschritt bei einer tiefen ersten Drehzahl und ein zweiter Bearbeitungsschritt bei einer viel höheren zweiten Drehzahl erfolgen muss, wobei sich die Zentrierung des Werkstücks bei diesen unterschiedlichen Drehzahlen verändern kann und bei der Bearbeitung des Werkstücks eine koaxiale Ungenauigkeit entstehen kann.

In der Patentschrift CH 597 951 wird eine Vorrichtung zum Vorschub von stangenförmigem Werkstoff für eine automatische Drehbank beschrieben. Eine Vorrichtung zur Zuführung eines Werkstücks ist derart ausgestaltet, dass keine übermässige Einspannung des Werkstücks vorgenommen werden muss und dass ein Stössel in die Spindel eintreten kann. Ferner sind in der Spindel zwei Führungsringe mit einem geringen Spiel gegenüber dem Werkstück angeordnet, sodass das Werkstück während der Bearbeitung an mindestens drei Stellen geführt ist. Es ist ein Nachteil, dass mit einer solchen Vorrichtung die Zentrierung von Materialstangen nur ungenügend gewährleistet werden kann.

In der europäischen Patentschrift EP 0 999 003 wird ein Stangenbearbeitungsgerät umfassend ein Zangenfutter, eine Spindel und eine Hohlwelle beschrieben. Die Hohlwelle ist koaxial zum Zangenfutter angebracht und dient der Aufnahme einer Stange. Mittels einer Öleinspritzeinrichtung wird Öl in die Hohlwelle zugeführt, sodass eine Ölschicht um die äussere Fläche der Stange gebildet wird. Es ist ein Nachteil, dass mit einer solchen Vorrichtung die Zentrierung von Materialstangen nur ungenügend gewährleistet werden kann. Es ist zudem kompliziert, eine Ölschicht in der beschriebenen Form zu gewährleisten. Durch den Einsatz von Gleit-Öl zur hydrodynamischen Lagerung der Materialstange gelangt dieses Gleit-Öl in die Maschine hinein. Dadurch kommt es zu einer Durchmischung zwischen dem Gleit-Öl und der für die Bearbeitung verwendeten Bearbeitungsöle oder Emulsionen. Das Gleit-Öl und die Bearbeitungsöle oder Emulsionen haben vollkommen unterschiedliche Aufgaben. Die Bearbeitungsöle oder Emulsionen sollen die Zerspanungswerkzeuge für die Zerspanung aggressiv-griffig machen, wohingegen das Gleit-Öl genau das Gegenteil bewirkt und zu einer Verminderung der Werkzeug-Standzeiten führt. Bearbeitungsöle oder Emulsionen werden in der Maschine normalerweise aufgefangen und einer Wiederverwendung zugeführt. Die mit Gleit-Öl durchmischten Bearbeitungsöle oder Emulsionen müssen allerdings schon nach kürzerer Verwendung ausgetauscht werden.

In der Offenlegungsschrift DE 32 10 630 wird eine Vorrichtung zur automatischen Zuführung von Stangenmaterial zu einer Drehmaschine beschrieben. Mehrere Klemmhalterungen mit Klemmbacken und Riemenscheiben sind längs der Stange angeordnet. Durch diese Halterungen wird eine Stange während der Zuführung zu einer Drehmaschine gehalten. Es ist ein Nachteil, dass die Steuerung der Riemenscheiben sehr kompliziert und aufwändig ist. Zudem sind grosse Anpassungen notwendig, um eine solche Vorrichtung bei bestehenden Drehmaschinen anzubringen.

Die Patentschrift CH 580 999 beschreibt eine Führungseinrichtung an einem Drehautomat zur Zentrierung und Stabilisierung von rotierenden Rund- und Profilstangen. Die Führungseinrichtung ist auf dem Zuführrohr eines Stangenlademagazins befestigt. Ein Rotor der Führungseinrichtung wird über die Automatenspindel angetrieben. Am Rotor sind Hebel angebracht, welche infolge der Fliehkraft um Drehpunkte ausschwenken. An einem Ende der Hebel sind Rollen angebracht, welche aufgrund der Ausschwenkung eine Kraft auf die Materialstange ausüben und zu einer Zentrierung der Materialstange führen. Es ist ein Nachteil dieser Vorrichtung, dass diese mit dem Stangenlademagazin und gleichzeitig mit der Automatenspindel verbunden sein muss. Die bei leicht verkrümmten Materialstangen zum Teil sehr starken Zentrifugalkräfte müssen von den ziemlich leicht gebauten Stangenladern aufgenommen werden. Dadurch kann eine nur ungenügende Unterdrückung von Schwingungen und Lärm erreicht werden. Es ist weiter ein Nachteil, dass die Rollen permanent in Bewegung sind. Bei Lademagazinen werden stillstehende Stösseleinrichtungen verwendet. Bei einer Verwendung dieser Führungseinrichtung würden deshalb die Rollen oder die Stösseleinrichtung schon nach kürzester Einsatzzeit zerstört.

### Darstellung der Erfindung

Es ist eine Aufgabe der vorliegenden Erfindung, ein neues Zentrierfutter zur Zentrierung von Materialstangen, welche einem Spannzangenfutter einer Drehbank zugeführt sind, vorzuschlagen, welche nicht die Nachteile des Standes der Technik aufweist. Das neue Zentrierfutter soll insbesondere für die Zentrierung der Materialstange und auch für die Zentrierung der Stösseleinrichtung, mit welcher die Materialstange in das Spannzangenfutter gestossen wird, geeignet sein.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass das Zentrierfutter eine um die Längsachse der Materialstange drehbare Aussenkonstruktion umfasst, dass das Zentrierfutter eine um die Längsachse der Materialstange drehbare Innenkonstruktion umfasst, wobei die Innenkonstruktion im Wesentlichen innerhalb der Aussenkonstruktion angeordnet ist, und wobei die Innenkonstruktion gegenüber der Aussenkonstruktion drehbar angeordnet ist, dass die Innenkonstruktion eingerichtet ist, damit die Materialstange durch die Innenkonstruktion hindurchgeführt werden kann, dass die Aussenkonstruktion Mittel umfasst, um die Aussenkonstruktion gegenüber dem Spannzangenfutter zu fixieren, dass die Aussenkonstruktion eine Fliehkraftvorrichtung umfasst, welche eine der Drehzahl entsprechende Kraft erzeugt, dass die Innenkonstruktion eine Zentriereinrichtung umfasst, welche aufgrund einer an die Zentriereinrichtung angelegten Kraft zu einer Zentrierung der Materialstange führt, und dass zwischen der Aussenkonstruktion und der Innenkonstruktion eine Kraftübertragungseinrichtung angeordnet ist, welche gewährleistet, dass die Innenkonstruktion gegenüber der Aussenkonstruktion drehbar ist und welche die durch die Fliehkraftvorrichtung erzeugte Kraft an die Zentriereinrichtung übertragt. Ein solches Zentrierfutter hat insbesondere den Vorteil, dass die Materialstange, welche dem Spannzangenfutter zugeführt ist, zentriert wird und dass die Stösseleinrichtung, welche ab einer gewissen Länge der Materialstange vom Zentrierfutter erfasst wird, zentriert wird.

In einer Ausführungsvariante ist zwischen der Innenkonstruktion und der Aussenkonstruktion mindestens ein Kugellager angeordnet. Ein solches Zentrierfutter hat insbesondere den Vorteil, dass die drehbare Anordnung der Innenkonstruktion gegenüber der Aussenkonstruktion bewährte und robuste Mittel umfasst.

In einer anderen Ausführungsvariante umfasst die Kraftübertragungseinrichtung mindestens ein Kugellager. Ein solches Zentrierfutter hat insbesondere den Vorteil, dass die Kraftübertragungseinrichtung mit einfachen und robusten Mitteln die Drehbarkeit der Innenkonstruktion gegenüber der Aussenkonstruktion und die gleichzeitige Kraftübertragung zwischen der Aussenkonstruktion und der Innenkonstruktion gewährleistet.

In einer weiteren Ausführungsvariante ist zwischen der Kraftübertragungseinrichtung und der Zentriereinrichtung ein Dämpfungselement angeordnet. Ein solches Zentrierfutter hat insbesondere den Vorteil, dass die Langlebigkeit des Zentrierfutters gewährleistet werden kann.

In einer anderen Ausführungsvariante sind drei entlang dem Umfang der Materialstange in regelmässigen Abständen angeordnete Zentriereinrichtungen angebracht. Ein solches Zentrierfutter hat insbesondere den Vorteil, dass eine grosse Laufruhe und eine hohe Effektivität bei der Zentrierung erreicht werden kann.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegten Figuren illustriert:
Figur 1 zeigt schematisch eine Drehmaschine und einen Stangenlader gemäss dem Stand der Technik.
Figur 2 zeigt schematisch eine Drehmaschine und einen Stangenlader mit einem angebrachten erfindungsgemässen Zentrierfutter.
Figur 3 zeigt schematisch ein erfindungsgemässes Zentrierfutter.
Figur 4 zeigt schematisch einen Querschnitt durch ein erfindungsgemässes Zentrierfutter.

### Weg(e) zur Ausführung der Erfindung

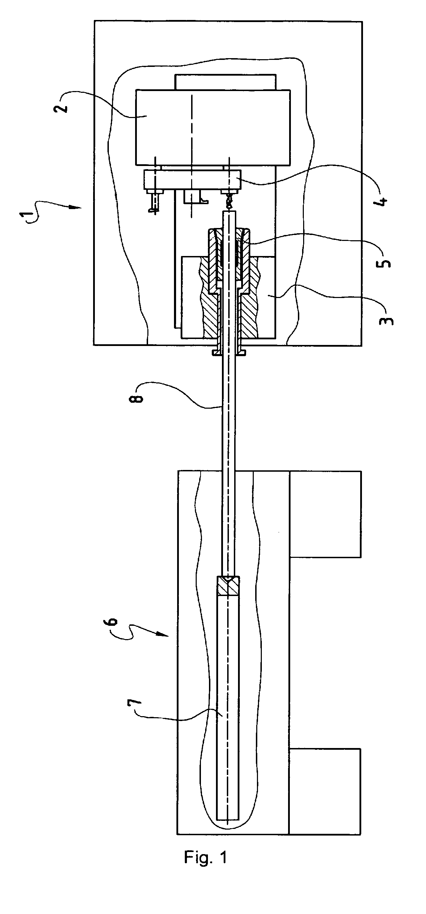

In Figur 1 bezieht sich das Bezugszeichen 1 auf eine Drehmaschine respektive auf ein Drehcenter. Die Drehmaschine 1 umfasst einen Werkzeugschlitten 2 mit einer Vorrichtung zur Aufnahme von Werkzeugen. Eine solche Vorrichtung zur Aufnahme von Werkzeugen kann beispielsweise als drehbare Vorrichtung, insbesondere als Revolverkopf 4, ausgeführt sein. An einem solchen Revolverkopf 4 können verschiedene Werkzeuge angebracht sein, insbesondere Werkzeuge zur Bearbeitung von Werkstücken unterschiedlicher Materialien, Werkzeuge welche für unterschiedliche Bearbeitungsgeschwindigkeiten ausgelegt sind oder auch z.B. Bohrer. Die Drehmaschine 1 umfasst ferner einen Spindelstock 3. Der Spindelstock 3 kann eine Hohlwelle umfassen und ein dazu axial angeordnetes Spannzangenfutter 5. Hohlwelle und Spannzangenfutter 5 können mittels eines Motors (nicht dargestellt) sowie beispielsweise mittels eines Getriebes (nicht dargestellt) angetrieben werden. Je nach Anwendung der Drehmaschine 1 und je nach Werkstück können Drehzahlen von z.B. 2000-3000 U/min., von 7000 U/min. oder von bis zu beispielsweise 18000 U/min. erreicht werden. Die Hohlwelle kann so ausgelegt sein, dass ein Werkstück durch die Hohlwelle hindurch dem Spannzangenfutter 5 zugeführt werden kann, wobei das Werkstück im Spannzangenfutter 5 eingespannt sowie auf eine bestimmte Drehzahl beschleunigt werden kann und wobei das drehende Werkstück mittels eines im Werkzeugschlitten 2 angebrachten Werkzeugs bearbeitet werden kann. Dazu umfasst insbesondere der Werkzeugschlitten 2 die notwendigen Vorrichtungen, um ein Werkzeug in einer Relativbewegung gegenüber dem Werkstück zu bewegen.

In Figur 1 bezieht sich das Bezugszeichen 6 auf einen Stangenlader respektive auf eine Vorrichtung zum Zuführen eines stangenförmigen Werkstücks zur Drehmaschine 1. In Figur 1 bezieht sich das Bezugszeichen 8 auf eine solche Materialstange. Der Stangenlader 6 kann eingerichtet sein, um Materialstangen von beispielsweise 1 m Länge bis z.B. 6m Länge aufzunehmen. Solche Materialstangen können insbesondere aus einem Rundmaterial, aus einem Vierkant-Material oder aus einem Sechskant-Material bestehen. Je nach Art der Materialstange 8 kann der oben beschriebene Nachteil, also beispielsweise der Nachteil einer Lärmentwicklung, mehr oder weniger ausgeprägt auftreten. Der Stangenlader 6 umfasst insbesondere eine Stösseleinrichtung 7, um die Materialstange 8 der Drehmaschine 1 zuzuführen. Dazu kann die Stösseleinrichtung 7 insbesondere einen auf einem Kugellager gelagerten Kopf umfassen, sodass die bei der Bearbeitung sich drehende Materialstange 8 gegenüber der sich nicht drehenden Stösseleinrichtung 7 drehend abgestützt werden kann.

Eine wie in Figur 1 skizzierte Drehmaschine 1 und ein entsprechender Stangenlader 6 können eingerichtet sein, um Werkstücke vollautomatisch über eine grössere Zeitdauer, wie beispielsweise über mehrere Stunden, herzustellen. So kann der Stangenlader 6 beispielsweise als Stangenlademagazin zur Aufnahme von mehreren Materialstangen ausgeführt sein. Bei einem solchen vollautomatischen Betrieb wird nach der Fertigstellung eines Werkstücks die Drehung der Materialstange gestoppt und anschliessend das Spannzangenfutter 5 geöffnet. Mittels der Stösseleinrichtung 7 wird die Materialstange um eine bestimmte Länge in Richtung des Werkzeugschlittens 2 geschoben und das Spannzangenfutter 5 wird wieder geschlossen. Anschliessend wird die Materialstange in Drehung versetzt und mittels der im Werkzeugschlitten 2 angebrachten Werkzeuge wird ein weiteres Werkstück hergestellt.

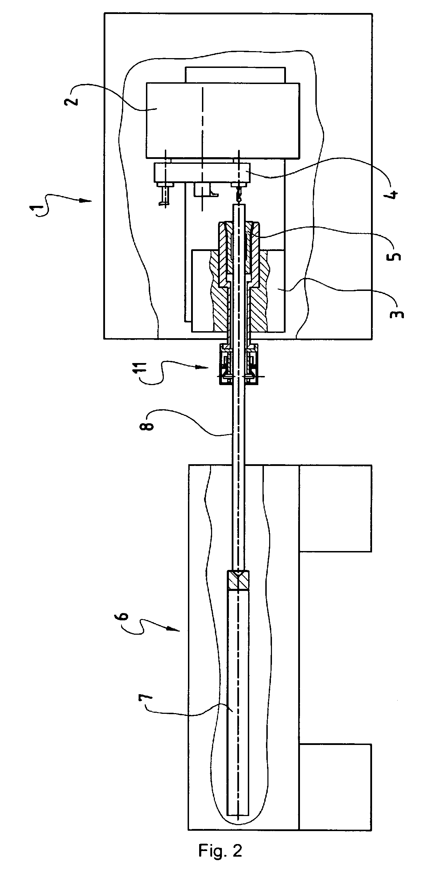

In Figur 2 ist eine Drehmaschine 1 mit einem Stangenlader 6 gezeichnet, wobei an der Hohlwelle des Spindestocks 3 ein erfindungsgemässes Zentrierfutter 11 angebracht ist.

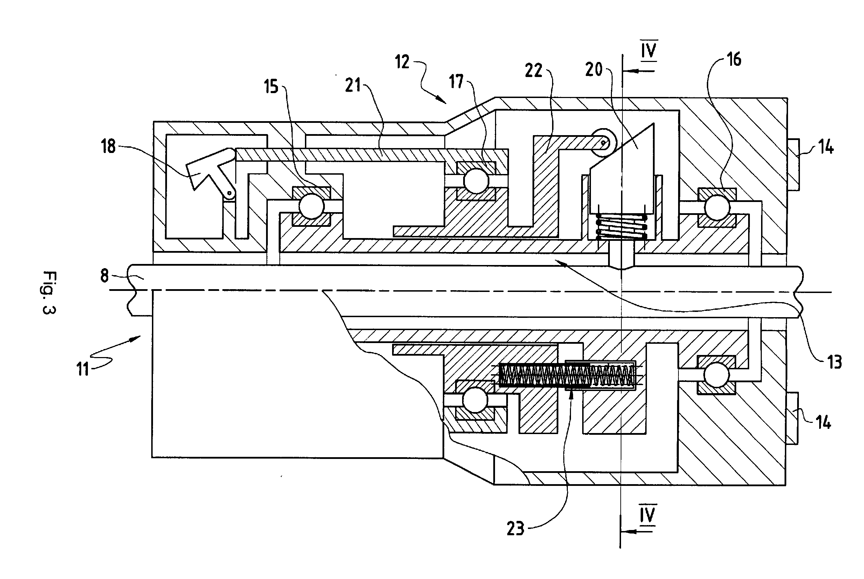

In Figur 3 ist schematisch ein erfindungsgemässes Zentrierfutter 11 gezeichnet. Das Zentrierfutter 11 umfasst eine Aussenkonstruktion 12 und eine Innenkonstruktion 13. In Figur 3 sind Teile der Aussenkonstruktion 12 in einer ersten Schraffur dargestellt und Teile der Innenkonstruktion 13 sind in einer zweiten Schraffur dargestellt. Die Aussenkonstruktion 12 umfasst Mittel 14, um die Aussenkonstruktion 12 gegenüber dem Spannzangenfutter 5 zu fixieren. Die Mittel 14 zur Fixierung gegenüber dem Spannzangenfutter 5 können in einer dem Fachmann bekannter Art und Weise ausgeführt sein und insbesondere einen Flansch oder äquivalente Mittel zur Verbindung mit der Hohlwelle des Spindelstocks 3 umfassen. Durch die Fixierung der Aussenkonstruktion 12 gegenüber dem Spannzangenfutter 5 wird bewirkt, dass die Aussenkonstruktion 12 mit derselben Drehzahl gedreht wird wie das Spannzangenfutter, d.h. während der Bearbeitung der Materialstange wird die Aussenkonstruktion 12 mit einer bestimmten Drehzahl gedreht und während dem Schieben der Materialstange 8 in Richtung des Werkzeugschlittens steht die Aussenkonstruktion 12 still.

Die Innenkonstrution 13 ist wie in Figur 3 skizziert im Wesentlichen innerhalb der Aussenkonstruktion 12 angeordnet. Die Innenkonstruktion 13 ist gegenüber der Aussenkonstruktion 12 drehbar angeordnet. Eine solche drehbare Anordnung kann beispielsweise wie in Figur 3 skizziert durch die Kugellager 15, 16, 17 erreicht werden. Dem Fachmann sind selbstverständlich Ausführungsvarianten bekannt, welche die gleiche technische Funktion der drehbaren Anordnung der Innenkonstruktion 13 erfüllt. Eines oder mehrere der Kugellager 15, 16, 17 können auch durch die Verwendung von zwei oder mehr nebeneinander angeordneten Kugellager gebildet sein. Es ist prinzipiell auch denkbar, auf gewisse dieser Kugellager zu verzichten.

In Figur 3 bezieht sich das Bezugszeichen 18 auf eine Fliehkraftvorrichtung. Die Fliehkraftvorrichtung 18 ist an der Aussenkonstruktion 12 angebracht. Wie in Figur 3 skizziert, kann die Fliehkraftvorrichtung 18 eine Achse und einen an der Achse angebrachten äusseren Teil umfassen, sodass dieser äusserer Teil bei einer Drehung der Aussenkonstruktion 12 durch die aufgrund der Drehung entstehenden Fliehkräfte um die Achse bewegt wird. Wie in Figur 3 skizziert, kann diese Bewegung des äusseren Teils der Fliehkraftvorrichtung 18 an eine Übertragungsvorrichtung übertragen werden.

In Figur 3 bezieht sich das Bezugszeichen 20 auf eine Zentriereinrichtung. Wie in Figur 3 skizziert, kann die Zentriereinrichtung 20 in einer Hülse geführt sein. Das eine Ende, in Figur 3 das obere Ende, kann eine schräge Fläche umfassen. Das andere Ende, in Figur 3 das untere Ende, kann ausgebildet sein, um an der Materialstange 8 aufzuliegen. Durch das Anlegen einer Kraft auf die schräge Fläche der Zentriereinrichtung 20, kann eine Kraft auf die Materialstange 8 übertragen werden. In der Innenkonstruktion 13 können mindestens zwei und bevorzugt drei Zentriereinrichtungen 20 beispielsweise in regelmässigem Abstand angebracht sein und es kann so durch das Anlegen einer Kraft auf die schrägen Flächen der Zentriereinrichtungen 20 eine in Richtung der Achse der Materialstange wirkende Kraft an der Materialstange 8 angebracht werden. Mit diesen Kräften kann eine Zentrierung der Materialstange 8 bewirkt werden.

Wie in Figur 3 skizziert kann die Übertragung der Kraft, welche durch die Fliehkraftvorrichtung 18 aufgrund der Drehung der Aussenkonstruktion entsteht, auf die schräge Fläche der Zentriereinrichtung 20 mittels einer Übertragungsvorrichtung 21 erfolgen. Die Übertragungsvorrichtung 21 umfasst einen ersten Übertragungsteil 21, welcher an der Aussenkonstruktion 12 angebracht ist, und einen zweiten Übertragungsteil 22, welcher an der Innenkonstruktion 13 angebracht ist. Zwischen dem ersten Übertragungsteil 21 und dem zweiten Übertragungsteil 22 ist ein Kugellager 17 angebracht. Statt eines einzelnen Kugellagers 17 können zwei oder mehrere parallel angebrachte Kugellager vorgesehen sein. Wie in Figur 3 skizziert ist das erste Übertragungsteil 21 in axialer Richtung verschiebbar an der Aussenkonstruktion 12 angebracht. Das erste Übertragungsteil 21 ist eingerichtet, um die von der Fliehkraftvorrichtung 18 erzeugte Kraft aufzunehmen und an das Kugellager 17 zu übertragen. Diese Kraft wird mittels des Kugellagers auf das zweite Übertragungsteil 22 übertragen. Das zweite Übertragungsteil 22 ist beispielsweise wie in Figur 3 skizziert als in axialer Richtung verschiebbare Hülse auf einem durch das Kugellager 15 und das Kugellager 16 gelagerten Innenteil der Innenkonstruktion angebracht. Durch das zweite Übertragungsteil 22 kann die auf dem Kugellager 17 angelegte Kraft aufgenommen werden. An einem Ende des zweiten Übertragungsteils 22 kann eine Rolle angebracht sein, mit welcher diese Kraft auf die Zentriermittel übertragen werden kann und aufgrund dieser Kraft die Zentrierung der Materialstange 8 bewirkt werden kann.

Da die Aussenkonstruktion 12 gegenüber dem Spannzangenfutter 5 aufgrund der erwähnten Mittel 14 fixiert ist, wird die Aussenkonstruktion 12 mit derselben Drehzahl gedreht wie das Spannzangenfutter. Da die Innenkonstruktion 13 gegenüber der Aussenkonstruktion 12 frei drehbar angeordnet ist, kann die Drehzahl der Innenkonstruktion 13 an die Drehzahl der Materialstange 8 respektive der Stösseleinrichtung 7 angepasst werden. Solange sich Teile der Materialstange 8 an der Stelle der Zentriermittel 20 befinden, wird die Innenkonstruktion 13 mit derselben Drehzahl wie die Materialstange 8 gedreht. Da die Materialstange 8 im Spannzangenfutter eingespannt ist, ist in diesem Fall die Drehzahl der Innenkonstruktion 13 gleich wie die Drehzahl der Aussenkonstruktion 12. Durch das Verschieben der Materialstange 8 mit der Stösseleinrichtung 7 befindet sich ab einer bestimmten Länge der Materialstange die Stösseleinrichtung 7 an der Stelle der Zentriermittel 20. Da sich die Stösseleinrichtung nicht dreht, ist in diesem Fall die Drehzahl der Innenkonstruktion 13 gleich null.

Die in Figur 3 skizzierten Bestandteile des Zentrierfutters können so angeordnet sein, dass die Materialstange 8 respektive die Stösseleinrichtung 7 im Wesentlichen an zwei Punkten, an drei Punkten oder an mehr Punkten zentriert wird. Dazu kann insbesondere eine entsprechende Anzahl Zentriermittel vorgesehen sein.

Wie in Figur 3 skizziert, können die Zentriermittel 20 mittels einer Feder von der Materialstange 8 weggestossen werden, sodass die Zentriermittel 20 bei stillstehender Aussenkonstruktion 12 die Materialstange 8 nicht berühren. Dadurch wird beispielsweise ein Zerkratzen der Materialstange 8 beim Schieben durch die Stösseleinrichtung 7 verhindert.

In Figur 3 bezieht sich das Bezugszeichen 23 auf ein Dämpfungselement. Das Dämpfungselement 23 kann beispielsweise zwischen einerseits Teilen der Innenkonstruktion 13 angeordnet sein, welche mit den Zentriermittel 20 verbunden sind, und andererseits Teilen der Innenkonstruktion 13 angeordnet sein, welche mit dem zweiten Übertragungsteil 22 verbunden sind. Das Dämpfungselement 23 kann beispielsweise Federelemente und/oder mit Öl oder Luft gefüllte Druckbehälter umfassen. Mittels des Dämpfungselements 23 kann die Bewegungsdynamik zwischen dem zweiten Übertragungsteil 22 und den Zentriermittel 20 in gewünschter Weise eingestellt und/oder kontrolliert werden.

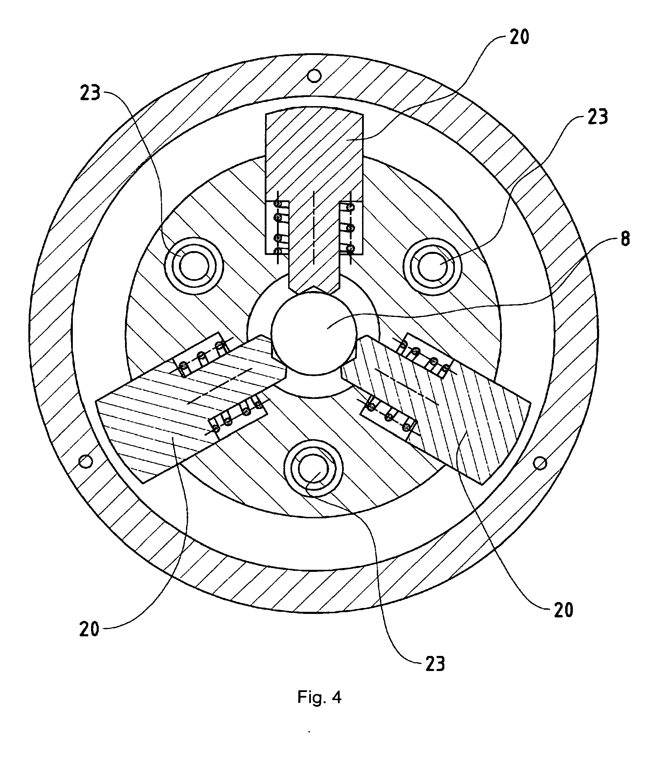

In Figur 4 ist schematisch der in Figur 3 dargestellte Querschnitt IV-IV skizziert. In Figur 4 sind drei symmetrisch angeordnete Zentriereinrichtungen 20 dargestellt. Es sei erwähnt, dass selbstverständlich auch nur zwei Zentriereinrichtungen 20 oder eine grössere Anzahl Zentriereinrichtungen 20 angeordnet sein können. Wie in Figur 4 skizziert wird durch die Zentriereinrichtungen 20 eine Materialstange 8 zentriert. In Figur 4 sind wiederum drei Dämpfungselement 23 skizziert. Es kann aber auch nur ein einzelnes Dämpfungselement 23 angeordnet sein oder es können eine grössere Anzahl Dämpfungselemente 23 sein.

## Patentansprüche

1. Zentrierfutter (11) zur Zentrierung einer Materialstange (8), welche einem Spannzangenfutter (5) einer Drehmaschine (1) zugeführt ist,
- wobei das Zentrierfutter (11) eine um die Längsachse der Materialstange (8) drehbare Innenkonstruktion (13) umfasst, wobei die Innenkonstruktion (13) im Wesentlichen innerhalb einer Aussenkonstruktion (12) angeordnet ist, und wobei die Innenkonstruktion (13) gegenüber der Aussenkonstruktion (12) drehbar angeordnet ist,
- wobei die Innenkonstruktion (13) eingerichtet ist, damit die Materialstange (8) durch die Innenkonstruktion (13) hindurchgeführt werden kann, **dadurch gekennzeichnet,**
- **dass** die Aussenkonstruktion (12) um die Längsachse der Materialstange (8) drehbar ist und Mittel umfasst, um die Aussenkonstruktion (12) gegenüber dem Spannzangenfutter (5) zu fixieren,
- **dass** die Aussenkonstruktion (12) eine Fliehkraftvorrichtung (18) umfasst, welche eine der Drehzahl entsprechende Kraft erzeugt, und
- **dass** die Innenkonstruktion (13) eine Zentriereinrichtung (20) umfasst, welche aufgrund einer an die Zentriereinrichtung (20) angelegten Kraft zu einer Zentrierung der Materialstange (8) führt, und dass zwischen der Aussenkonstruktion (12) und der Innenkonstruktion (13) eine Kraftübertragungseinrichtung (21,17,22) angeordnet ist, welche gewährleistet, dass die Innenkonstruktion (13) gegenüber der Aussenkonstruktion (12) drehbar ist und welche die durch die Fliehkraftvorrichtung (18) erzeugte Kraft an die Zentriereinrichtung (20) überträgt.

2. Zentrierfutter nach Anspruch 1, **dadurch gekennzeichnet, dass** zwischen der Innenkonstruktion (13) und der Aussenkonstruktion (12) mindestens ein Kugellager (15,16) angeordnet ist.

3. Zentrierfutter nach einem der Ansprüche 1 bis 2, **dadurch gekennzeichnet, dass** die Kraftübertragungseinrichtung (21,17,22) mindestens ein Kugellager (17) umfasst.

4. Zentrierfutter nach einem der Ansprüche 1 bis 3, **dadurch gekennzeichnet, dass** zwischen der Kraftübertragungseinrichtung (21,17,22) und der Zentriereinrichtung ein Dämpfungselement (23) angeordnet ist.

5. Zentrierfutter nach einem der Ansprüche 1 bis 4, **dadurch gekennzeichnet, dass** drei entlang einem Umfang der Materialstange (8) in im Wesentlichen regelmässigen Abständen angeordnete Zentriereinrichtungen (20) angebracht sind.

## Claims

1. A centering chuck (11) for centering a material bar (8) that is supplied to a collet chuck (5) of a lathe (1),
- wherein the centering chuck (11) comprises an inner structure (13) that is rotatable about the longitudinal axis of the material bar (8), the inner structure (13) being arranged substantially within an outer structure (12), and the inner structure (13) being arranged so as to be rotatable in relation to the outer structure (12),
- wherein the inner structure (13) is set up to enable the material bar (8) to be guided through the inner structure (13), **characterized in that**,
- the outer structure (12) is rotatable about the longitudinal axis of the material bar (8) and comprises means for fixing the outer structure (12) in relation to the collet chuck (5),
- the outer structure (12) comprises a centrifugal force device (18) that produces a force corresponding to the rotational speed, and
- the inner structure (13) comprises a centering device (20), which, owing to a force applied to the centering device (20), causes the material bar (8) to be centered, and there is arranged between the outer structure (12) and the inner structure (13) a force transfer device (21, 17, 22) that ensures that the inner structure (13) is rotatable in relation to the outer structure (12), and that transfers to the centering device (20) the force produced by the centrifugal-force device (18).

2. The centering chuck as claimed in claim 1, **characterized in that** at least one ball bearing (15, 16) is arranged between the inner structure (13) and the outer structure (12).

3. The centering chuck as claimed in one of claims 1 to 2, **characterized in that** the force transfer device (21, 17, 22) comprises at least one ball bearing (17).

4. The centering chuck as claimed in one of claims 1 to 3, **characterized in that** a damping element (23) is arranged between the force transfer device (21, 17, 22) and the centering device.

5. The centering chuck as claimed in one of claims 1 to 4, **characterized in that** three centering devices (20) are mounted, arranged substantially at regular intervals along a circumference of the material bar (8).

## Revendications

1. Mandrin de centrage (11) pour le centrage d'une barre de matériau (8), qui est acheminée à un mandrin à pince de serrage (5) d'un tour (1),
dans lequel :
- le mandrin de centrage (11) comprend une construction interne (13) pouvant tourner autour de l'axe longitudinal de la barre de matériau (8), la construction interne (13) étant disposée essentiellement à l'intérieur d'une construction externe (12), et la construction interne (13) étant disposée de manière à pouvoir tourner par rapport à la construction externe (12),
- la construction interne (13) est prévue de telle sorte que la barre de matériau (8) puisse être guidée à travers la construction interne (13), **caractérisé en ce que**
- la construction externe (12) peut tourner autour de l'axe longitudinal de la barre de matériau (8) et comprend des moyens pour fixer la construction externe (12) par rapport au mandrin à pince de serrage (5),
- la construction externe (12) comprend un dispositif à force centrifuge (18) qui produit une force correspondant à une vitesse de rotation et
- la construction interne (13) comprend un dispositif de centrage (20) qui, sur la base d'une force appliquée au dispositif de centrage (20), conduit à un centrage de la barre de matériau (8), et **en ce qu'**entre la construction externe (12) et la construction interne (13) est disposé un dispositif de transfert de force (21, 17, 22) qui fait en sorte que la construction interne (13) puisse tourner par rapport à la construction externe (12) et qui transmet la force produite par le dispositif à force centrifuge (18) au dispositif de centrage (20).

2. Mandrin de centrage selon la revendication 1, **caractérisé en ce qu'**au moins un roulement à billes (15, 16) est disposé entre la construction interne (13) et la construction externe (12).

3. Mandrin de centrage selon l'une quelconque des revendications 1 à 2, **caractérisé en ce que** le dispositif de transfert de force (21, 17, 22) comprend au moins un roulement à billes (17).

4. Mandrin de centrage selon l'une quelconque des revendications 1 à 3, **caractérisé en ce qu'**un élément d'amortissement (23) est disposé entre le dispositif de transfert de force (21, 17, 22) et le dispositif de centrage.

5. Mandrin de centrage selon l'une quelconque des revendications 1 à 4, **caractérisé en ce que** trois dispositifs de centrage (20) disposés essentiellement à intervalles réguliers sont montés le long d'une périphérie de la barre de matériau (8).
